# EUROPEAN PATENT SPECIFICATION

(11) **EP 2 663 183 B1**
(45) Date of publication and mention of the grant of the patent: **15.03.2017**
(21) Application number: 12700230.1
(22) Date of filing: 11.01.2012
(51) Int. Cl.: A01N 25/28, A01N 37/02, A01N 31/02, A01P 7/04

(54) **POLY(METH)ACRYLATE BASED MICROCAPSULES COMPRISING PHEROMONE**
POLY(METH)ACRYLAT BASIERTE MIKROKAPSELN MIT PHEROMON
MICROCAPSULES À BASE DE POLY(MÉTH)ACRYLATE COMPRENANT UNE PHÉROMONE

(30) Priority: 14.01.2011 US 201161432608 P; 03.02.2011 EP 11153238
(43) Date of publication of application: 20.11.2013
(60) Divisional application: 14152585.7
(73) Proprietor: BASF SE, 67056 Ludwigshafen am Rhein (DE)
(72) Inventor: BENLAHMAR, Ouidad, 68163 Mannheim (DE); SCHRÖDER-GRIMONPONT, Tina, 76764 Rheinzabern (DE); STRACKE, Joseph, 67259 Kleinniedesheim (DE); HENNESSEY, Tiffany, Wake Forest NC 27587 (US); KLEIN, Clark, D., Pittsboro NC 27312 (US); TARANTA, Claude, 76297 Stutensee (DE)
(74) Representative: BASF IP Association
(86) International application number: PCT/EP2012/050345
(87) International publication number: WO 2012/095444

(56) References cited:
- EP-A1- 1 447 003
- WO-A2-2010/105971
- DE-A1- 19 945 846
- GB-A- 2 445 179
- US-A- 5 008 478
- US-A1- 2010 261 839
- ZHIHUA YANG, MARIE BENGTSSON AND PETER WITZGALL: "Host Plant Volatiles Synergize Response to Sex Pheromone in Codling Moth, Cydia pomonella", JOURNAL OF CHEMICAL ECOLOGY, vol. 30, no. 3, 3 March 2004 (2004-03-03), pages 619-629, XP002648912, ISSN: 0098-0331, DOI: 10.1023/B:JOEC.0000018633.94002.af
- FEDERICA TRONA, GIANFRANCO ANFORA, MARIE BENGTSSON, PETER WITZGALL AND RICKARD IGNELL: "Coding and interaction of sex pheromone and plant volatile signals in the antennal lobe of the codling moth Cydia pomonella", THE JOURNAL OF EXPERIMENTAL BIOLOGY, vol. 213, 15 December 2010 (2010-12-15), pages 4291-4303, XP002648913, ISSN: 0022-0949, DOI: 10.1242/jeb.047365
- JAIME C. PIÑERO AND RONALD J. PROKOPY: "Field Evaluation of Plant Odor and Pheromonal Combinations for Attracting Plum Curculios", JOURNAL OF CHEMICAL ECOLOGY, vol. 29, no. 12, 12 December 2003 (2003-12-12), pages 2735-2748, XP002648914, ISSN: 0098-0331, DOI: 10.1023/B:JOEC.0000008017.16911.aa

## Description

The present invention relates to a microcapsule comprising a capsule core, which contains a pheromone, a water-immiscible organic solvent, and a capsule wall, which contains in polymerized form 30 to 90% by weight of one or more C₁-C₂₄-alkyl esters of acrylic acid and/or methacrylic acid, acrylic acid, methacrylic acid and/or maleic acid (monomers I), 10 to 70% by weight of one or more difunctional and/or polyfunctional monomers (monomers II), and 0 to 40% by weight of one or more other monomers (monomer III), in each case based on the total weight of the monomers, wherein the pheromone is present in dissolved form in the capsule core, wherein the capsule core contains an attractant selected from non-food attractants and food attractants, and wherein the non-food attractants are flavors of natural or synthetic origin, or mixtures thereof, wherein the water-immiscible organic solvent has a solubility in water of up to 10 g/l at 20 °C, wherein the capsule wall comprises in copolymerized form 25% to 75% by weight of maleic acid, methacrylic acid and/or acrylic acid based on the total amount of the monomers I, wherein the difunctional monomers are divinylmonomers selected from diesters of diols with acrylic acid or methacrylic acid, and diallyl and divinyl ethers of diols, and wherein the polyfunctional monomers are polyvinylmonomers selected from polyesters of polyols with acrylic acid and/or methacrylic acid, polyallyl and polyvinyl ethers of polyols, trivinylbenzene and trivinylcyclohexane. The invention further relates to a process for the preparation of said microcapsules; a method for controlling undesired insect infestation.

Insect pests, particularly insect s of the order Lepidoptera, such as codling moth, are responsible for substantial losses of crops. Various methods use microcapsules, which contain pheromones to control such undesired insects.

WO 00/48465 discloses microcapsules comprising a capsule core, which contains a pheromone and a diluent, and a capsule shell. For example, a microcapsule was disclosed comprising codling moth pheromone and Miglyol 812 in the capsule core, wherein the capsule wall was formed by an ethylene-maleic acid copolymer.
WO 98/44912 discloses microcapsules containing a pheromone and a shell wall made of polyurea, polyurethane, melamine/urea or gelatin.
WO 98/45036 discloses microcapsules containing a pheromone (e.g. (E,E)-8,10-dodecadien-1-ol) encapsulated within polyurea or polyurea/polyurethane shell.
EP 0141584 discloses microcapsules comprising a core of pheromones (e.g. codlure) and a permeable polymer, which is for example a polymethylmethacrylate or polyacrylate.

Disadvantages of the state of the art are that it often requires the handling of highly toxic isocyanate monomers for synthesis of the shell wall, that residual isocyanates may be contained in the final product, that the capsules are not tight and the pheromone evaporates very fast, that pure pheromone is encapsulated, which is very expensive; or that the it is not possible to adjust the release rates carefully.

Object of the invention was to overcome said disadvantages of the state of the art.

The object was solved by a microcapsule comprising a capsule core, which contains a pheromone, a water-immiscible organic solvent, and a capsule wall, which contains in polymerized form
- 30 to 90% by weight: of one or more C₁-C₂₄-alkyl esters of acrylic acid and/or methacrylic acid, acrylic acid, methacrylic acid and/or maleic acid (monomers I),
- 10 to 70% by weight: of one or more difunctional and/or polyfunctional monomers (monomers II), and
- 0 to 40% by weight: of one or more other monomers (monomer III),
in each case based on the total weight of the monomers,
wherein the pheromone is present in dissolved form in the capsule core,
wherein the capsule core contains an attractant selected from non-food attractants and food attractants, and wherein the non-food attractants are flavors of natural or synthetic origin, or mixtures thereof,
wherein the water-immiscible organic solvent has a solubility in water of up to 10 g/l at 20 °C, wherein the capsule wall comprises in copolymerized form 25% to 75% by weight of maleic acid, methacrylic acid and/or acrylic acid based on the total amount of the monomers I,
wherein the difunctional monomers are divinylmonomers selected from diesters of diols with acrylic acid or methacrylic acid, and diallyl and divinyl ethers of diols, and wherein the polyfunctional monomers are polyvinylmonomers selected from polyesters of polyols with acrylic acid and/or methacrylic acid, polyallyl and polyvinyl ethers of polyols, trivinylbenzene and trivinylcyclohexane.

The polymerization of said monomers usually results in a poly(meth)acrylate. Poly(meth)-acrylate is a known encapsulation material, for example from WO 2008/071649, EP 0 457154 or DE 10 2007 055 813. US2005/282011 discloses a microcapsule emulsion and a method for producing the same; WO2010/105971 describes a method for treatment of crop with an encapsulated pesticide; and US2010/286018 discloses scent-comprising microcapsules with improved release behaviour.

The poly(meth)acrylate of the **capsule wall** comprise at least 30%, in a preferred form at least 40%, in a particularly preferred form at least 50%, more particularly at least 60%, with very particular preference at least 70%, and not more than 90%, more particularly not more than 85%, and, with very particular preference, not more than 80%, by weight, of at least one monomer from the group comprising C₁-C₂₄ alkyl esters of acrylic and/or methacrylic acid, acrylic acid, methacrylic acid, and maleic acid (**monomers I**), in copolymerized form, based on the total weight of the monomers.

Furthermore the poly(meth)acrylate of the capsule wall comprises at least 10%, preferably at least 15%, preferentially at least 20%, and also, not more than 70%, preferably not more than 60%, and with particular preference not more than 50%, by weight, of one or more difunctional or polyfunctional monomers (**monomers II**), in copolymerized form, based on the total weight of the monomers. In another preferred embodiment, the poly(meth)acrylate of the capsule wall comprises at least 10%, preferably at least 15%, and also, in general, not more than 50%, preferably not more than 40% by weight, of one or more polyfunctional monomers (monomers II), in copolymerized form, based on the total weight of the monomers.

Additionally, the poly(meth)acrylate may comprise up to 40%, preferably up to 30%, more particularly up to 20%, by weight, of other **monomers III**, in copolymerized form. The capsule wall is preferably synthesized only from monomers of groups I and II.

Suitable **monomers I** are C₁-C₂₄ alkyl esters of acrylic and/or methacrylic acid, acrylic acid, methacrylic acid, and also maleic acid. Suitable monomers I are isopropyl, isobutyl, sec-butyl, and tert-butyl acrylates and the corresponding methacrylates, and also, with particular preference, methyl, ethyl, n-propyl, and n-butyl acrylates and the corresponding methacrylates. In general the methacrylates and methacrylic acid are preferred.

The microcapsule walls comprise 25% to 75% by weight of maleic acid, methacrylic acid and/or acrylic acid, more particularly methacrylic acid, based on the total amount of the monomers I, in copolymerized form.

**Monomers II** are difunctional and/or polyfunctional monomers. The difunctional monomsers are divinyl monomers and the polyfunctional monomers are polyvinyl monomers.

Divinyl monomers are the diesters of diols with acrylic acid or methacrylic acid, and also the diallyl and divinyl ethers of these diols. Mention may be made, by way of example, of ethanediol diacrylate, ethylene glycol dimethacrylate, 1,3-butylene glycol dimethacrylate, methallylmethacrylamide, allyl acrylate, and allyl methacrylate. Particular preference is given to propanediol, 1,4-butanediol, pentanediol, and hexanediol diacrylates and the corresponding methacrylates.

**Polyvinyl monomers** are the polyesters of polyols with acrylic acid and/or methacrylic acid, and also the polyallyl and polyvinyl ethers of these polyols, trivinylbenzene and trivinylcyclohexane. Particular preference is given to trimethylolpropane triacrylate and trimethacrylate, pentaerythritol triallyl ether, pentaerythritol tetraallyl ether, pentaerythritol triacrylate, and pentaerythritol tetraacrylate, and also their technical mixtures.

**Monomers III** contemplated are other monomers, typically different than the mononers I and II, such as vinyl acetate, vinyl propionate, vinylpyridine, and styrene or α-methylstyrene. Particular preference is given to itaconic acid, vinylphosphonic acid, maleic anhydride, 2-hydroxyethyl acrylate and methacrylate, acrylamido-2-methylpropanesulfonic acid, methacrylonitrile, acrylonitrile, methacrylamide, N-vinylpyrrolidone, N-methylolacrylamide, N-methylolmethacrylamide, dimethylaminoethyl methacrylate, and diethylaminoethyl methacrylate.

The **average particle size** of the microcapsules (z-average by means of light scattering; preferably a D_{4,3} average) is 0.5 to 50 µm, preferably 0.5 to 8 µm, more preferably 1 to 5 µm, and especially 1 to 3 µm.

The microcapsule according to the invention may comprise from 1 to 50 wt%, preferably from 5 to 40 wt% in particular from 10 to 30 wt% **capsule shell**, based on the total weight of the microcapsule. For calculating the weight of the capsule shell, the amounts of monomers I, II and III are added.

The present invention further relates to a **process for the preparation of the microcapsules** according to the invention, which comprises preparing an oil-in-water emulsion from monomers, free-radical initiator, protective colloid and the pheromone to be encapsulated, and triggering the polymerization of the monomers by heating. The preparation process of the microcapsules is what is called an *in situ* polymerization. The principle of microcapsule formation is based on the preparation of a stable oil-in-water emulsion from the monomers, a free-radical initiator, the protective colloid, and the pheromone to be encapsulated. Subsequently the polymerization of the monomers is triggered by heating and is controlled, if appropriate, by further increase in temperature, the resulting polymers forming the capsule wall which encloses the pheromone. This general principle is described, for example, in DE A 101 39 171. Usually, the oil-in-water emulsion contains from 0,3 to 15 wt%, preferably form 1,0 to 10 wt%, and in particular from 2,0 to 8,0 wt% protective colloid, based on the total weight of the emulsion.

The **protective colloid** is generally incorporated into the capsule wall and is therefore likewise a constituent of the capsule wall. Generally speaking, the surface of the polymer has the protective colloid. Thus it is possible for there to be up to 10% by weight, based on the total weight of the microcapsules, of protective colloid.

**Pheromones** are well known chemical compounds used for controlling undesired insects. For example, Metcalf, R. L. Ullmann's Encyclopedia of Industrial Chemistry 2000, keyword "Insect Control", lists in chapter 15.1 (Sex pheromone attractants) and chapter 15.2 (Aggregation pheromones" suitable examples, wherein the pheromones for Lipidoptera in Table 4 are highly suitable.

Examples of pheromones include volatile alkanols and alkenols having from 5 to 18 carbon atoms, volatile alkanals and alkenals having from 5 to 18 carbon atoms, alkanones having from 6 to 18 carbon atoms, 1,7-dioxaspirononan and 3- or 4-hydroxy-1,7-dioxaspiroundecan, benzyl alcohol, Z-(9)-tricosene (muscalure), heneicosene, diacetyl, alcanoic acids having from 5 to 16 carbon atoms such as caprylic acid, laurylic acid, α-pinen, methyleugenol, ethyldodecanoate, tert-butyl 4-(or 5-)chloro-2-ethylcyclohexane-carboxylate, mycrenone, cucurbitacin, trimedlure (commercially available as Capilure®), and (E,E)-8,10-dodecadien-1-ol (codlemone).

Further examples of known pheromones are: Z-5-Decenyl acetate, dodecanyl acetate, Z-7-dodecenyl acetate, E-7-dodecenyl acetate, Z-8-dodecenyl acetate, E-8-dodecenyl acetate, Z-9-dodecenyl acetate, E-9-dodecenyl acetate, E-10-dodecenyl acetate, 11-dodecenyl acetate, Z-9,11-dodecadienyl acetate, E-9,11-dodecadienyl acetate, Z-11-tridecenyl acetate, E-11-tridecenyl acetate, tetradecenyl acetate, E-7-tetradecenyl acetate, Z-8-tetradecenyl acetate, E-8-tetradacenyl acetate, Z-9-tetradecenyl acetate, E-9-tetradecenyl acetate, Z-10-tetradecenyl acetate, E-10-tetradecenyl acetate, Z-11-tetradecenyl acetate, E-11-tetradecenyl acetate, Z-12-pentadecenyl acetate, E-12-pentadecenyl acetate, hexadecanyl acetate, Z-7-hexadecenyl acetate, Z-11-hexadecenyl acetate, E-11-hexadecenyl acetate, octadecanyl acetate, E,Z-7,9-dodecadienyl acetate, Z,E-7,9-dodecadienyl acetate, E,E-7,9-dodecadienyl acetate, Z,Z-7,9-dodecadienyl acetate, E,E-8,10-dodecadienyl acetate, E,Z-9,12-dodecadienyl acetate, E,Z-4,7-tri-decadienyl acetate, 4-methoxy-cinnamaldehyde, [beta]-ionone, estragol, eugenol, indole, 8-methyl-2-decyl propanoate, E,E-9,11-tetradecadienyl acetate, Z,Z-9,12-tetradecadienyl acetate, Z,Z-7,11-hexadecadienyl acetate, E,Z-7,11-hexadecadienyl acetate, Z,E-7,11-hexadecadienyl acetate, E,E-7,11-hexadecadienyl acetate, Z,E-3,13-octadecadienyl acetate, E,Z-3,13-octadecadienyl acetate, E,E-3,13-octadecadienyl acetate, hexanol, heptanol, octanol, decanol, Z-6-nonenol, E-6-nonenol, dodecanol, 11-dodecenol, Z-7-dodecenol, E-7-dodecenol, Z-8-dodecenol, E-8-dodecenol, E-9-dodecenol, Z-9-dodecenol, E-9,11-dodecadienol, Z-9,11-dodecadienol, Z,E-5,7-dodecadienol, E,E-5,7-dodecadienol, E,E-8,10-dodecadienol, E,Z-8,10-dodecadienol, Z,Z-8,10-dodecadienol, Z,E-8,10-dodecadienol, E,Z-7,9-dodecadienol, Z,Z-7,9-dodecadienol, E-5-tetradecenol, Z-8-tetradecenol, Z-9-tetradecenol, E-9-tetradecenol, Z-10-tetradecenol, Z-11-tetradecenol, E-11-tetradecenol, Z-11-hexadecenol, Z,E-9,11-tetradecadienol, Z,E-9,12-tetradecadienol, Z,Z-9,12-tetradecadienol, Z,Z-10,12-tetradecadienol, Z,Z-7,11-hexadecadienol, Z,E-7,11-hexadecadienol, (E)-14-methyl-8-hexadecen-1-ol, (Z)-14-methyl-8-hexadecen-1-ol, E,E-10,12-hexadecadienol, E,Z-10,12-hexadecadienol, dodecanal, Z-9-dodecenal, tetradecanal, Z-7-tetradecenal, Z-9-tetradecenal, Z-11-tetradecenal, E-11-tetradecenal, E-11,13-tetradecadienal, E,E-8,10-tetradecadienal, Z,E-9,11-tetradecadienal, Z,E-9,12-tetradecadienal, hexadecanal, Z-8-hexadecenal, Z-9-hexadecenal, Z-10-hexadecenal, E-10-hexadecenal, Z-11-hexadecenal, E-11-hexadecenal, Z-12-hexadecenal, Z-13-hexadecenal, (Z)-14-methyl-8-hexadecenal, (E)-14-methyl-8-hexadecenal, Z,Z-7,11-hexadecadienal, Z,E-7,11-hexadecadienal, Z,E-9,11-hexadecadienal, E,E-10,12-hexadecadienal, E,Z-10,12-hexadecadienal, Z,E-10,12-hexadecadienal, Z,Z-10,12-hexadecadienal, Z,Z-11,13-hexadecadienal, octadecanal, Z-11-octadecenal, E-13-octadecenal, Z-13-octadecenal, Z-5-decenyl-3-methyl butanoate disparlure: (+) cis-7,8-epoxy-2-methyloctadecane, seudenol: 3-methyl-2-cyclohexen-1-ol, sulcatol: 6-methyl-5-hepten-2-ol, ipsenol: 2-methyl-6-methylene-7-octen-4-ol, ipsdienol: 2-methyl-6-methylene-2,7-octadien-4-ol, grandlure I: cis-2-isopropenyl-1-methylcyclobutane-ethanol, grandlure II: Z-3,3-dimethyl-1-cyclohexane-ethanol, grandlure III: Z-3,3-dimethyl-1-cyclohexane-acetalde-hyde, grandlure IV: E-3,3-dimethyl-1-cyclohexane-acetaldehyde, cis-2-ver-benol: cis-4,6,6-trimethylbicyclo[3,1,1]hept-3-en-2-ol cucurbitacin, 2-methyl-3-buten-2-ol, 4-methyl-3-heptanol, cucurbitacin, 2-methyl-3-buten-2-ol, 4-methyl-3-heptanol, [alpha]-pinene: 2,6,6-trimethylbicyclo[3,1,1]hepten-2-ene, [alpha]-caryophyllene: 4,11,11-trimethyl-8-methylene-bicyclo[7,2,0]undecane, Z-9-tricosene, ([alpha]-multistriatin, 2-(2-endo,4-endo)-5-ethyl-2,4-dimethyl-6,8-dioxabicyclo[3,2,1]octane, methyleugenol: 1,2-dimethoxy-4-(2-propenyl)phenol, lineatin: 3,3,7-trimethyl-2,9-dioxatricyclo[3,3,1,0]nonane, chal-cogran: 2-ethyl-1,6-dioxaspiro[4,4]nonane, frontalin: 1,5-dimethyl-6,8-dioxabicyclo[3,2,1]octane, endo-brevicomin: endo-7-ethyl-5-methyl-6,8-dioxabicyclo[3,2,1]octane, exo-brevicomin: exo-7-ethyl-5-methyl-6,8-dioxabicyclo[3,2,1]octane, (Z)-5-(1-decenyl)dihydro-2-(3H)-furanone, farne-sol: 3,7,11-trimethyl-2,6,10-dodecatrien-1-ol, nerolidol 3,7-11-trimethyl-1,6,10-dodecatrien-3-ol, 3-methyl,6-(1-methylethenyl)-9-decen-1-01 acetate, (Z)-3-methyl-6-(1-methylethenyl)-3,9-decadien-1-ol acetate, (E)-3,9-methyl-6-(1-methyl-ethenyl)-5,8-decadien-1-ol acetate, 3-methylene-7-methyl-octen-1-ol propionate, (Z)-3,7-dimethyl-2,7-octadien-1-ol propionate, (Z)-3,9-dimethyl-6-(1-methyl-ethenyl)-3,9-decadlien-1-ol propionate.

Preferred pheromones are Z-9-dodecenyl acetate (commercially available as RAK® 1 from BASF SE), (E7,Z9)-dodecadienly acetate (commercially available as RAK® 2 from BASF SE), (E,E)-8,10-dodecadien-1-ol (commercially available as RAK® 3 from BASF SE) and Z-8-dodecenyl acetate.

Particularly preferred pheromone comprises (E,E)-8,10-dodecadien-1-ol, which is also known as **codlemone** or codlure, and commercially available (e.g. as CheckMate® CM-F from Suterra LLC, USA, Isomate®-C Plus from Pacific Biocontrol Corp. USA; RAK® 3 from BASF SE). Codlemone may be used in pure form, in technical quality or mixed with other pheromones.

The pheromone may have a **solubility** in water of up to 5000 g/l at 20 °C, preferably of up to 1000 mg/l and especially of up to 100 mg/l.

The pheromone is present in the capsule core in dissolved form.

Due to its high costs, it preferred that the core comprises up to 30 wt%, especially up to 20 wt% and in particular up to 10 wt% pheromone. The total weight of the capsule core may be calculated by adding the amounts of pheromone, water-immiscible organic solvent, and attractant.

The capsule core contains a **water-immiscible organic solvent**. The solubility in water of said solvent is up to 10 g/l at 20 °C, preferably up to 3 g/l and in particular up to 0,5 g/l.

The capsule core may comprise up to 45 wt% water-immiscible organic solvent (such as fatty acid glycerides). In particular, the capsule core comprises from 10 to 50 wt%, especially from 20 to 40 wt% water-immiscible organic solvent.

Examples for suitable organic solvents are mineral oil fractions of medium to high boiling point, such as kerosene or diesel oil, furthermore coal tar oils and oils of vegetable or animal origin, fatty acid glycerides, aliphatic, cyclic and aromatic hydrocarbons, e. g. toluene, xylene, paraffin, tetrahydronaphthalene, alkylated naphthalenes or their derivatives. Mixtures of organic solvents may also be used. Preferred organic solvents are a fatty acid glyceride and/or a hydrocarbons. In particular fatty acid glycerides are preferred.

Suitable **fatty acid glycerides** are oils such as corn oil, soybean oil, canola oil, peanut oil, olive oil, palm oil, coconut oil, cottonseed oil, and sunflower oil. Mixtures of these oils as well as refined or purified oils obtained there from can also be used. Such oils refined for specific food or pharmaceutical applications may be classified as oils rich in short-, medium-or long-chained fatty acids. Fats with low melting point produced by varying the degree of hydrogenation of the aforementioned oils or isolated by selective crystallization from various plant oils can also be used. Oils derived from an animal source such as butterfat oil, and low melting point fats from animals such as butterfat and lard can be used as well, although some animal oils may require additional stability control. Natural waxes like carnauba wax (a plant wax), candellila wax (a plant wax) can also be used. Mixture of these various oils, hydrogenated oils, and waxes derived from various plant or animal source can also be used.

Preferred **fatty acid glycerides** are C₆ to C₁₄ fatty acid glycerides, preferably C₈ to C₁₂ fatty acid glycerides and in particular C₈ to C₁₀ fatty acid glycerides. These fatty acid glycerides usually contain at least 80 wt% of the fatty acids with aforementioned chain lengths. The fatty acids are preferably saturated. They are preferably triglycerides. Most preferred is caprylic/capric acid triglyceride, which is for example commercially available as Myritol® 312 from Cognis, Germany, Miglyol® 810 or Miglyol® 812 from Sasol, Germany.

The capsule core contains an **attractant**. Attractants are non-pesticidal materials which may act in one or several of the following ways: a) entice the insect to approach the composition or the material treated with the composition; b) entice the insect to touch the composition or the material treated with the composition; c) entice the insect to consume the composition or the material treated with the composition; and d) entice the insect to return to the composition or the material treated with the composition. The attractant is selected from **non-food attractants and food attractants**, also termed as feeding stimulants.

Suitable non-food attractants are usually volatile material. The volatile attractants act as a lure and their type will depend on the pest to be controlled in a known manner. Non-food attractants are **flavors** of natural or synthetic origin, or mixtures thereof. Suitable flavors include meat flavor, yeast flavor, seafood flavor, milk flavor, butter flavor, cheese flavor, onion flavor, and fruit flavors such as flavors of apple, apricot, banana, blackberry, cherry, currant, gooseberry, grape, grapefruit, raspberry and strawberry.

Suitable **food attractants** include:
- proteins, including animal proteins and plant proteins, e. g. in the form meat meal, fish meal, fish extracts, seafood, seafood extracts, or blood meal, insect parts, crickets powder, yeast extracts, egg yolk, protein hydrolysates, yeast autolysates, gluten hydrolysates, and the like;
- carbohydrates and hydrogenated carbohydrates, in particular mono- and disaccharides such glucose, arabinose, fructose, mannose, sucrose, lactose, galactose, maltose, maltotriose, maltotetrose, maltopentose or mixtures thereof such as molasses, corn syrup, maple syrup, invert sugars, and honey; polysaccharides including starch such as potato starch, corn starch, and starch based materials such as cereal powders (e.g. wheat powder, maize powder, malt powder, rice powder, rice bran), pectines, and glycerol, hydrogenated mono- and oligosaccharides (sugar alcohols) such as xylitol, sorbitol, mannitol, isomaltolose, trehalose and maltitol as well as maltitol containing syrups;

Preferred attractants are ethyl 3-methylbutanoate, methyl salicylate, amyl acetate, limonene or fruit extracts (e.g. apple extracts made from dried and extracted apples, comprises fructose, glucose, sorbitol, and the flavor of apples). Mixtures of attractants are also suitable.

Most preferred attractant is ethyl 3-methylbutanoate.

The **solubility** in water of the attractants is usually up to 50 g/l at 20 °C, preferably up to 10 g/l, and in particular up to 1 g/l. This helps to ensure that the attractant is encapsulated.

Usually, the **weight ratio of pheromone to attractant** is in the range from 1 / 99 to 40 / 60, preferably from 3 / 98 to 30 / 70, and in particular from 5 / 95 to 20 / 80.

In a preferred embodiment, the capsule core comprises
1 to 20 wt% pheromone (e.g. codlemone),
5 to 60 wt% water-immiscible organic solvent (e.g. fatty acid glycerides), and
35 to 85 wt% attractant (e.g. ethyl 3-methylbutanoate),
wherein the components add up to 100 wt%.

In an especially preferred embodiment, the capsule core comprises
3 to 10 wt% pheromone,
15 to 45 wt% water-immiscible organic solvent, and
45 to 75 wt% attractant,
wherein the components add up to 100 wt%.

The method for controlling undesired insect infestation according to the present invention is usually not applied for therapeutic purposes.
The microcapsule according to the invention may be formulated in an **agrochemical composition**. Examples for composition types are suspensions (SC, OD, FS), emulsifiable concentrates (EC), emulsions (EW, EO, ES), pastes, pastilles, wettable powders or dusts (WP, SP, SS, WS, DP, DS) or granules (GR, FG, GG, MG), which can be water-soluble or wettable, as well as gel formulations.

The agrochemical compositions may comprise **auxiliaries** which are customary in agrochemical compositions. The auxiliaries used depend on the particular application form and active substance, respectively. Examples for suitable auxiliaries are solvents, solid carriers, dispersants or emulsifiers (such as further solubilizers, protective colloids, surfactants and adhesion agents), organic and anorganic thickeners, bactericides, anti-freezing agents or anti-foaming agents.

Suitable **solvents** are water, organic solvents such as mineral oil fractions of medium to high boiling point, such as kerosene or diesel oil, furthermore coal tar oils and oils of vegetable or animal origin, aliphatic, cyclic and aromatic hydrocarbons, e. g. toluene, xylene, paraffin, tetrahydronaphthalene, alkylated naphthalenes or their derivatives, alcohols such as methanol, ethanol, propanol, butanol and cyclohexanol, glycols, ketones such as cyclohexanone and gamma-butyrolactone, fatty acid dimethylamides, fatty acids and fatty acid esters and strongly polar solvents, e. g. amines such as N-methylpyrrolidone. Preferred solvent is water.

Suitable **surfactants** (adjuvants, wtters, tackifiers, dispersants or emulsifiers) are alkali metal, alkaline earth metal and ammonium salts of aromatic sulfonic acids, such as ligninsulfonic acid (Borresperse^{®} types, Borregard, Norway) phenolsulfonic acid, naphthalenesulfonic acid (Morwet^{®} types, Akzo Nobel, U.S.A.), dibutylnaphthalene-sulfonic acid (Nekal^{®} types, BASF, Germany),and fatty acids, alkylsulfonates, alkylarylsulfonates, alkyl sulfates, laurylether sulfates, fatty alcohol sulfates, and sulfated hexa-, hepta- and octadecanolates, sulfated fatty alcohol glycol ethers, furthermore condensates of naphthalene or of naphthalenesulfonic acid with phenol and formaldehyde, polyoxy-ethylene octylphenyl ether, ethoxylated isooctylphenol, octylphenol, nonylphenol, alkylphenyl polyglycol ethers, tributylphenyl polyglycol ether, tristearyl-phenyl polyglycol ether, alkylaryl polyether alcohols, alcohol and fatty alcohol/ethylene oxide condensates, ethoxylated castor oil, polyoxyethylene alkyl ethers, ethoxylated polyoxypropylene, lauryl alcohol polyglycol ether acetal, sorbitol esters, lignin-sulfite waste liquors and proteins, denatured proteins, polysaccharides (e. g. methylcellulose), hydrophobically modified starches, polyvinyl alcohols (Mowiol^{®} types, Clariant, Switzerland), polycarboxylates (Sokolan^{®} types, BASF, Germany), polyalkoxylates, polyvinylamines (Lupasol^{®} types, BASF, Germany), polyvinylpyrrolidone and the copolymers therof.

Examples for **thickeners** (i. e. compounds that impart a modified flowability to compositions, i. e. high viscosity under static conditions and low viscosity during agitation) are polysaccharides and organic and anorganic clays such as Xanthan gum (Kelzan^{®}, CP Kelco, U.S.A.), Rhodopol^{®} 23 (Rhodia, France), Veegum^{®} (R.T. Vanderbilt, U.S.A.) or Attaclay^{®} (Engelhard Corp., NJ, USA). **Bactericides** may be added for preservation and stabilization of the composition. Examples for suitable bactericides are those based on dichlorophene and benzylalcohol hemi formal (Proxel^{®} from ICI or Acticide^{®} RS from Thor Chemie and Kathon^{®} MK from Rohm & Haas) and isothiazolinone derivatives such as alkylisothiazolinones and benzisothiazolinones (Acticide^{®} MBS from Thor Chemie). Examples for suitable **anti-freezing** agents are ethylene glycol, propylene glycol, urea and glycerin. Examples for **anti-foaming** agents are silicone emulsions (such as e. g. Silikon^{®} SRE, Wacker, Germany or Rhodorsil^{®}, Rhodia, France), long chain alcohols, fatty acids, salts of fatty acids, fluoroorganic compounds and mixtures thereof.

Various types of oils, wetters, adjuvants, herbicides, bactericides, and/or other pesticides may be added to the pesticide or the compositions comprising them, if appropriate not until immediately prior to use (**tank mix**). These agents can be admixed with the microcapsules according to the invention in a weight ratio of 1:100 to 100:1, preferably 1:10 to 10:1. Adjuvants which can be used are in particular polyether modified polysiloxanes such as Break Thru® S 240; fatty alcohol alkoxylates such as Plurafac® LF 120 (BASF) and Lutensol® ON 30 (BASF); EO/PO block polymers, e. g. Pluronic® RPE 2035 and Genapol B, alcohol ethoxylates such as Lutensol XP 80^{®}; dioctyl sulfosuccinate sodium such as Leophen RA^{®}, polyvinylalcohols, such as Plurafac® LF 240 (BASF). Especially preferred adjuvants are fatty alcohol alkoxylates and polyether modified polysiloxanes.

The treatment of crop with the microcapsules according to the invention may be done by applying said microcapsules by ground or aerial application, preferably by ground application. Suitable application devices are a predosage device, a knapsack sprayer, a spray tank or a spray plane. Preferably the treatment is done by ground application, for example by a predosage device, a knapsack sprayer or a spray tank. The ground application may be done by a user walking through the crop field or with a motor vehicle. Usually, 0,5 to 500 liters of the ready-to-use spray liquor are applied per hectare of agricultural useful area, preferably 0,5 to 200 liters, more preferably 0,5 to 30 liters, and in particular 1 to 10 liters. Typically, the microcapsules are applied at a rate of 0,1 to 100 g pheromone/ha, preferably 0,1 to 50 g pheromone/ha.
The invention further relates to a method for controlling undesired insect infestation wherein the microcapsules according to the invention are allowed to act on the habitat of the insects in question, or the plants to be protected from the insects in question. The method for controlling undesired insect infestation according to the present invention is usually not applied for therapeutic purposes. The method for controlling undesired insect infestation, wherein the microcapsules are allowed to act on the habitat of the insects in question, or the plants to be protected from the insects in question is usually non-therpeutically. Depending on the type of pheromone, the method can be used for controlling a large number of arthropods, including insects and arachnids. The method is particularly useful for combating **insects,** e.g. from the following orders:
lepidopterans (Lepidoptera), for example Agrotis ypsilon, Agrotis segetum, Alabama argillacea, Anticarsia gemmatalis, Argyresthia conjugella, Autographa gamma, Bupalus piniarius, Cacoecia murinana, Capua reticulana, Cheimatobia brumata, Choristoneura fumiferana, Choristoneura occidentalis, Cirphis unipuncta, Cydia pomonella, Dendrolimus pini, Diaphania nitidalis, Di-atraea grandiosella, Earias insulana, Elasmopalpus lignosellus, Eupoecilia ambiguella, Evetria bouliana, Feltia subterranea, Galleria mellonella, Grapholitha funebrana, Grapholitha molesta, Heliothis armigera, Heliothis virescens, Heliothis zea, Hellula undalis, Hibernia defoliaria, Hyphantria cunea, Hyponomeuta malinellus, Keiferia lycopersicella, Lambdina fiscellaria, Laphygma exigua, Leucoptera coffeella, Leucoptera scitella, Lithocolletis blancardella, Lobesia botrana, Loxostege sticticalis, Lymantria dispar, Lymantria monacha, Lyonetia clerkella, Malacosoma neustria, Mamestra brassicae, Orgyia pseudotsugata, Ostrinia nubilalis, Panolis flammea, Pectinophora gossypiella, Peridroma saucia, Phalera bucephala, Phthorimaea operculella, Phyllocnistis citrella, Pieris brassicae, Plathypena scabra, Plutella xylostella, Pseudoplusia includens, Rhyacionia frustrana, Scrobipalpula absoluta, Sitotroga cerealella, Sparganothis pilleriana, Spodoptera frugiperda, Spodoptera littoralis, Spodoptera litura, Thaumatopoea pityocampa, Tortrix viridana, Trichoplusiani and Zeiraphera canadensis;
beetles (Coleoptera), for example Agrilus sinuatus, Agriotes lineatus, Agriotes obscurus, Amphimallus solstitialis, Anisandrus dispar, Anthonomus grandis, Anthonomus pomorum, Aphthona euphoridae, Athous haemorrhoidalis, Atomaria linearis, Blastophagus piniperda, Blitophaga undata, Bruchus rufimanus, Bruchus pisorum, Bruchus lentis, Byctiscus betulae, Cassida nebulosa, Cerotoma trifurcata, Cetonia aurata, Ceuthorrhynchus assimilis, Ceuthorrhynchus napi, Chaetocnema tibialis, Conoderus vespertinus, Crioceris asparagi, Ctenicera ssp., Diabrotica longicornis, Diabrotica semipunctata, Diabrotica 12-punctata Diabrotica speciosa, Diabrotica virgifera, Epilachna varivestis, Epitrix hirtipennis, Eutinobothrus brasiliensis, Hylobius abietis, Hypera brunneipennis, Hypera postica, lps typographus, Lema bilineata, Lema melanopus, Leptinotarsa decemlineata, Limonius californicus, Lissorhoptrus oryzophilus, Melanotus communis, Meligethes aeneus, Melolontha hippocastani, Melolontha melolontha, Oulema oryzae, Ortiorrhynchus sulcatus, Otiorrhynchus ovatus, Phaedon cochleariae, Phyllobius pyri, Phyllotreta chrysocephala, Phyllophaga sp., Phyllopertha horticola, Phyllotreta nemorum, Phyllotreta striolata, Popillia japonica, Sitona lineatus and Sitophilus granaria;
flies, mosquitoes (Diptera), e.g. Aedes aegypti, Aedes albopictus, Aedes vexans, Anastrepha ludens, Anopheles maculipennis, Anopheles crucians, Anopheles albimanus, Anopheles gambiae, Anopheles freeborni, Anopheles leucosphyrus, Anopheles minimus, Anopheles quadrimaculatus, bactrocera olea, Calliphora vicina, Ceratitis capitata, Chrysomya bezziana, Chrysomya hominivorax, Chrysomya macellaria, Chrysops discalis, Chrysops silacea, Chrysops atlanticus, Cochliomyia hominivorax, Contarinia sorghicola Cordylobia anthropophaga, Culicoides furens, Culex pipiens, Culex nigripalpus, Culex quinquefasciatus, Culex tarsalis, Culiseta inornata, Culiseta melanura, Dacus cucurbitae, Dacus oleae, Dasineura brassicae, Delia antique, Delia coarctata, Delia platura, Delia radicum, Dermatobia hominis, Fannia canicularis, Geomyza Tripunctata, Gasterophilus intestinalis, Glossina morsitans, Glossina palpalis, Glossina fuscipes, Glossina tachinoides, Haematobia irritans, Haplodiplosis equestris, Hippelates spp., Hylemyia platura, Hypoderma lineata, Leptoconops torrens, Liriomyza sativae, Liriomyza trifolii, Lucilia caprina, Lucilia cuprina, Lucilia sericata, Lycoria pectoralis, Mansonia titillanus, Mayetiola destructor, Musca domestica, Muscina stabulans, Oestrus ovis, Opomyza florum, Oscinella frit, Pegomya hysocyami, Phorbia antiqua, Phorbia brassicae, Phorbia coarctata, Phlebotomus argentipes, Psorophora columbiae, Psila rosae, Psorophora discolor, Prosimulium mixtum, Rhagoletis cerasi, Rhagoletis pomonella, Sarcophaga haemorrhoidalis, Sarcophaga sp., Simulium vittatum, Stomoxys calcitrans, Tabanus bovinus, Tabanus atratus, Tabanus lineola, and Tabanus similis, Tipula oleracea, and Tipula paludosa;
cockroaches (Blattodea), e.g. Blattella germanica, Blattella asahinae, Periplaneta americana, Periplaneta japonica, Periplaneta brunnea, Periplaneta fuligginosa, Periplaneta australasiae, and Blatta orientalis;
ants, bees, wasps, sawflies (Hymenoptera), e.g. Athalia rosae, Atta cephalotes, Atta capiguara, Atta cephalotes, Atta laevigata, Atta robusta, Atta sexdens, Atta texana, Crematogaster spp., Hoplocampa minuta, Hoplocampa testudinea, Monomorium pharaonis, Solenopsis geminata, Solenopsis invicta, Solenopsis richteri, Solenopsis xyloni, Pogonomyrmex barbatus, Pogonomyrmex californicus, Pheidole megacephala, Dasymutilla occidentalis, Bombus spp. Vespula squamosa, Paravespula vulgaris, Paravespula pennsylvanica, Paravespula germanica, Dolichovespula maculata, Vespa crabro, Polistes rubiginosa, Camponotus floridanus, and Linepithema humile;
crickets, grasshoppers, locusts (Orthoptera), e.g. Acheta domestica, Gryllotalpa gryllotalpa, Locusta migratoria, Melanoplus bivittatus, Melanoplus femurrubrum, Melanoplus mexicanus, Melanoplus sanguinipes, Melanoplus spretus, Nomadacris septemfasciata, Schistocerca americana, Schistocerca gregaria, Dociostaurus maroccanus, Tachycines asynamorus, Oedaleus senegalensis, Zonozerus variegatus, Hieroglyphus daganensis, Kraussaria angulifera, Calliptamus italicus, Chortoicetes terminifera, and Locustana pardalina.

Preferred arthropods are Lepidoptera, beetles, flies, mosquitoes, cockroaches, ants, bees, wasps, sawflies, crickets, grasshoppers and locusts. In a further embodiment, arthropods are Lepidoptera, beetles, cockroaches, ants, bees, wasps, sawflies, crickets, grasshoppers and locusts. More preferably, the arthropods are Lepidoptera, such as **Cydia pomonella** (codling moth).

The present invention offers various **advantages**: It does not require the handling of highly toxic isocyanate monomers for synthesis of the shell wall; no residual isocyanates may be contained in the final product; the capsules are tight and the pheromone evaporates over a long time; it is possible to adjust the release rate; the expensive pheromone may be diluted with oils without loosing its attractivity; the ethyl isovalerate enhances the attractivity of the pheromone, especially codlemone.

The following examples are meant to illustrate the invention and are not to be viewed in any way as limiting to the scope of the invention.

### Examples

Marcol® 82: purified mixture of liquid saturated hydrocarbons (CAS 8042-47-5), obtained from petroleum through several refining stages, including an ultimate purification by catalytic hydrogenation; Carbon Type in %: Paraffinic / Naphthenic / Aromatic 65/35/0 (ASTM D 2140), commercially available from ExxonMobile.
Exxsol® D 140: Dearomatized hydrocarbon fluid, aromatic content (UV) 0,6 wt%, initial Bp 275 °C, final Bp 315 °C, commercially available from ExxonMobile.
Corn Oil: Standard corn oil, commercially available from Roth as "Maiskeimöl, raffiniert".
Edenor® Ti 05: Olein, commercially available from Cognis.
White oil: Parrafinic oil.

### Example 1 - Synthesis of microcapsules

Water phase:

| | |
|---|---|
| 52,47 g | water |
| 5,90 g | polyvinylalcohol (degree of hydrolysis 74-80 mol%, viscosity 5,2-6,2 mPas of a 4% aqueous solution at 20 °C determined by Brookfield viscometer) |
| 0,16 g | 2,5 wt% aqueous sodium nitrite solution |

Oil phase:

| | |
|---|---|
| 17,68 g | (E)7-(Z)9-dodecadienylacetate (pheromone) |
| 17,68 g | 1,8-diisopropyl naphthalene (DIPN) |
| 1,18 g | methylmethacrylate |
| 0,79 g | 1,4-butane diole diacrylate |
| 1,18 g | meth acrylic acid |
| 0,79 g | PETIA |

Feed 1: 0,28 g of a 75 wt% solution of t-butylperpivalate in hydrocarbons
Feed 2: 0,43 g of a 10 wt% solution of t-Butylhydroperoxide in water
Feed 3: 1,98 g water and 0,02 g ascorbic acid

The water phase was initially charged. Addition of the oil phase was followed by dispersion. The emulsion formed was then transferred to a flask and Feed 1 was added and the mixture was heated to 70°C while stirring and kept at 70°C for one hour. It was then heated to 85°C and kept at 85°C for two hours. Feed 2 was added to the microcapsule dispersion formed while stirring. Feed 3 was metered in within 50 minutes, in the course of which the mixture was cooled to room temperature within 60 minutes. The microcapsule dispersion formed possessed a solid content and a mean particle size as given in Table 6 (size was measured by Fraunhofer diffraction, volume average).

### Example 2- Synthesis of microcapsules

Water phase:

| | |
|---|---|
| 43,62 g | water |
| 15,72 g | polyvinyl alcohol (10 wt% in water, degree of hydrolysis 88 %) |
| 0,16 g | 2,5 wt% aqueous sodium nitrite solution |

Oil phase:

| | |
|---|---|
| 17,68 g | Z-8-dodecenyl acetate (pheromone) |
| 17,68 g | water immiscible solvent |
| 1,18 g | methylmethacrylate |
| 1,18 g | methacrylic acid |
| 0,79 g | 1,4-butane diole diacrylate |
| 0,79 g | PETIA |

Feed 1: 0,28 g 75 wt% solution of t-butylperpivalate in aliphat. hydrocarbon
Feed 2: 0,43 g 10 wt% solution of t-butylhydroperoxide in water
Feed 3: 1,98 g water and 0,02 g ascorbic acid

The water phase was initially charged. Addition of the oil phase was followed by. The emulsion formed was then transferred to a flask and Feed 1 was added and the mixture was heated to 70°C while stirring and kept at 70°C for one hour. It was then heated to 85°C and kept at 85°C for two hours. Feed 2 was added to the microcapsule dispersion formed while stirring. Feed 3 was metered in within 50 minutes, in the course of which the mixture was cooled to room temperature within 60 minutes. The microcapsule dispersion formed possessed a solid content and a mean particle size as given in Table 1.

**Table 1: Composition and analysis of capsules with different solvent**

| Sample | Water immiscible solvent | Solid content [%] | Particle size (D[0,5]) [µm] | Evaporation rate at 130 °C [%] |
|---|---|---|---|---|
| A | 1,8-Diisopropyl-naphthalene | 40,7 | 5,9 | 0,2 |
| B | Marcol® 82 | 41,2 | 2,2 | 0,4 |

### Example 3 - Synthesis of microcapsules

Water phase:

| | |
|---|---|
| 236,3 g | water |
| 60,0 g | polyvinyl alcohol (10% by weight in water, degree of hydrolysis 88%) |
| 0,23 g | of a 2.5% by weight aqueous sodium nitrite solution |

Oil phase:

| | |
|---|---|
| 45,2 g | water-immiscible solvent / codlemone (weight ratio 9/1) |
| 3,39 g | methyl methacrylate (MMA) |
| 3,39 g | methacrylic acid (MAS) |
| 2,26 g | butandiol diacrylate (BDDA) |
| 2,26 g | PETIA |

Feed 1: 0,40 g tert-butyl perpivalate (75%)
Feed 2: 0,62 g 10 wt% aqueous tert-butyl hydroperoxide solution in hydrocarbons
Feed 3: 3,3 g 1 wt% aqueous ascorbic acid solution

First, the water phase and the oil phase were produced separately with the above composition. The water phase was initially charged at room temperature. Addition of the oil phase was followed by dispersion with a disperser stirrer at 15 000 rpm for 1 minute. The emulsion formed was then transferred to a flask under nitrogen and stirring. Feed 1 was added and the mixture was heated to 70°C while stirring with an anchor stirrer and kept at 70°C for one hour. It was then heated to 85°C and kept at 85°C for two hours. Feed 2 was added to the microcapsule dispersion formed while stirring. Feed 3 was metered in within 50 minutes, in the course of which the mixture was cooled to room temperature within 60 minutes. Various solvents were used (see Table 2).

**Table 2: Preparation of further microcapsules with different water-immiscible solvents.**

| No. | Type of Solvent | Solid content ^{a)} [wt%] | Evaporation rate at 130 °C [%] |
|---|---|---|---|
| A | Corn oil | 41,9 | 6,8 |
| B | Edenor® Ti05 | 39,4 | 6,6 |
| C | Exxsol® D140 | 39,5 | 6,2 |
| D | caprylic/capric acid triglyceride | 38,6 | 12,5 |
| E | Marcol® 82 | 39,2 | 6,1 |
| F | Soybean oil | 39,7 | 3,7 |
| G | White oil | 43,3 | 3,0 |

| | | | |
|---|---|---|---|
| a) theoretical solid content was 40,0 wt%. The measured solid content is given in this column. | | | |

Further microcapsules were prepared according to this synthesis, wherein the composition of the monomers and the amount of the protective colloid polyvinylalcohol was varied. The water-immiscible solvent was diisopropylnaphthalene. Details are summarized in Table 3.

**Table 3: Preparation of further microcapsules, wherein the water-immiscible solvent was 1,8-diisoprppylnaphthalene (EDGMA: Ethyleneqlycol dimethacrylate).**

| No. | PVA [wt%] ^{b)} | MMA [wt%] ^{c)} | MAS [wt%] ^{c)} | PETIA [wt%] ^{c)} | BDDA [wt%] ^{c)} | EGDMA [wt%] ^{c)} | SC [wt%] ^{d)} | ER [%] ^{e)} |
|---|---|---|---|---|---|---|---|---|
| H | 1,89 | 30 | 30 | 20 | 20 | - | 32,7 | 16,0 |
| I | 1,89 | 30 | 30 | 20 | 20 | - | 33,6 | 5,0 |
| J | 1,89 | 40 | 40 | 10 | 10 | - | 33,8 | 12,6 |
| K | 1,89 | 25 | 25 | 25 | 25 | - | 34,9 | 9,3 |
| L | 1,89 | 40 | 20 | - | 40 | - | 37,5 | 12,7 |
| M | 1,89 | 30 | 30 | 20 | - | 20 | 35,3 | 10,0 |
| N | 1,89 | 30 | 30 | - | 20 | 20 | 35,9 | 11,2 |
| O | 2,50 | 30 | 30 | 20 | 20 | - | 39,0 | 5,5 |
| P | 4,00 | 30 | 30 | 20 | 20 | - | 38,7 | 5,1 |

| | | | | | | | | |
|---|---|---|---|---|---|---|---|---|
| a) The core contained instead of diisopropylnaphthalene/codlemone only codlemone, but no diiso-propylnaphthalene. b) wt% based on total weight of dispersion. c) wt% based on total weight of monomers. d) SC: Solid content. Theoretical solid content was 39,8 wt%. The measured solid content is given in this column. e) ER: Evaporation rate at 130 °C. | | | | | | | | |

### Example 4 - Synthesis of microcapsules

Water phase:

| | |
|---|---|
| 27,36 g | water |
| 45,63 g | polyvinyl alcohol (10% by weight in water, degree of hydrolysis 88%) |
| 0,17 g | of a 2.5% by weight aqueous sodium nitrite solution |

Oil phase:

| | |
|---|---|
| 35,0 g | water-immiscible solvent / pheromone / attractant (weight ratio see Table 1) |
| 2,58 g | methyl methacrylate |
| 2,58 g | methacrylic acid |
| 1,72 g | butandiol diacrylate |
| 1,72g | PETIA |

Feed 1: 0,30 g tert-butyl perpivalate (75%)
Feed 2: 0,47 g 10 wt% aqueous tert-butyl hydroperoxide solution in hydrocarbons
Feed 3: 2,51 g 1 wt% aqueous ascorbic acid solution

The pheromone was codlemone and the attractant was ethyl 3-methylbutanoate. PETIA is a technical mixture of tri- and tetraacrylate of pentaerythritol. First, the water phase and the oil phase were produced separately with the above composition. The water phase was initially charged at room temperature. Addition of the oil phase was followed by dispersion with a disperser stirrer at 15 000 rpm for 1 minute. The emulsion formed was then transferred to a flask under nitrogen and stirring. Feed 1 was added and the mixture was heated to 70°C while stirring with an anchor stirrer and kept at 70°C for one hour. It was then heated to 85°C and kept at 85°C for two hours. Feed 2 was added to the microcapsule dispersion formed while stirring. Feed 3 was metered in within 50 minutes, in the course of which the mixture was cooled to room temperature within 60 minutes. The microcapsule dispersion formed possessed a solids content and a mean particle size as given in Table 4 (size was measured by Fraunhofer diffraction, volume average).

**Table 4: Composition of the capsule core (CC: Fractionated coconut oil, mixture of caprylic(capric tryiglyceride; PO: paraffinic oil; SO: Soy oil, CO: Corn oil).**

| No. | Pheromone [wt%] | Attractant [wt%] | Solvent | Solvent [wt%] | Solids [wt%]^{b)} | Pheromone mixture [wt%]^{c)} | ER [%]^{d)} | Size [µm]^{e)} |
|---|---|---|---|---|---|---|---|---|
| 1^{a)} | 0 | 100 | -- | 0 | 36,6 | 25,8 | 3,7 | 3,3 |
| 2^{a)} | 10 | 90 | - | 0 | 34,6 | 29,3 | 8,3 | 3,1 |
| 3^{a)} | 15 | 85 | - | 0 | 31,0 | 26,4 | 4,0 | 2,7 |
| 4^{a)} | 20 | 80 | - | 0 | 34,0 | 29,3 | 25,5 | 2,7 |
| 5 | 0,9 | 89,1 | CC | 10 | 36,3 | 26,4 | 1,5 | 1,9 |
| 6 | 4,5 | 85,5 | CC | 10 | 32,4 | 25,8 | 0,7 | 1,9 |
| 7 | 9 | 81 | CC | 10 | 36,6 | 26,3 | 4,9 | 1,9 |
| 8 | 7 | 63 | CC | 30 | 37,7 | 20,0 | 1,5 | 1,8 |
| 9 | 7 | 63 | CC | 30 | 35,2 | 20,0 | 0,9 | 2,2 |
| 10 | 0,9 | 89,1 | PO | 10 | 32,3 | 25,8 | 1,2 | 1,2 |
| 11 | 4,5 | 85,5 | PO | 10 | 30,5 | 25,8 | 1,6 | 1,8 |
| 12 | 9 | 81 | PO | 10 | 36,4 | 25,8 | 3,8 | 2,3 |
| 13 | 7 | 63 | PO | 30 | 36,8 | 20,0 | 1,7 | 1,8 |
| 14 | 7 | 63 | PO | 30 | 34,4 | 20,0 | 0,4 | 2,1 |
| 15 | 13,5 | 76,5 | PO | 10 | 33,7 | 25,8 | 4,2 | 1,9 |
| 16 | 18 | 72 | PO | 10 | 34,9 | 26,3 | 9,1 | 2,2 |
| 17 | 7 | 63 | SO | 30 | 37,0 | 20,0 | 2,1 | 1,8 |
| 18 | 7 | 63 | CO | 30 | 36,9 | 20,0 | 1,3 | 0,8 |

| | | | | | | | | |
|---|---|---|---|---|---|---|---|---|
| a) Comparative, not according to the invention. b) Solid content of dispersion. c) Content of sum of pheromone and attractant in dispersion. d) ER: Evaporation rate at 130 °C. e) Mean particle size. | | | | | | | | |

## Claims

1. A microcapsule comprising a capsule core, which contains a pheromone, a water-immiscible organic solvent, and a capsule wall, which contains in polymerized form
30 to 90% by weight of one or more C₁-C₂₄-alkyl esters of acrylic acid and/or methacrylic acid, acrylic acid, methacrylic acid and/or maleic acid (monomers I),
10 to 70% by weight of one or more difunctional and/or polyfunctional monomers (monomers II), and
0 to 40% by weight of one or more other monomers (monomer III),
in each case based on the total weight of the monomers,
wherein the pheromone is present in dissolved form in the capsule core,
wherein the capsule core contains an attractant selected from non-food attractants and food attractants, and wherein the non-food attractants are flavors of natural or synthetic origin, or mixtures thereof,
whererin the water-immiscible organic solvent has a solubility in water of up to 10 g/l at 20 °C,
wherein the capsule wall comprises in copolymerized form 25% to 75% by weight of maleic acid, methacrylic acid and/or acrylic acid based on the total amount of the monomers I,
wherein the difunctional monomers are divinylmonomers selected from diesters of diols with acrylic acid or methacrylic acid, and diallyl and divinyl ethers of diols, and
wherein the polyfunctional monomers are polyvinylmonomers selected from polyesters of polyols with acrylic acid and/or methacrylic acid, polyallyl and polyvinyl ethers of polyols, trivinylbenzene and trivinylcyclohexane.

2. The microcapsule according to claim 1, wherein the pheromone has a solubility in water of up to 1000 mg/l at 20 °C.

3. The microcapsule according to claims 1 or 2, wherein the organic solvent is a fatty acid triglyceride or a hydrocarbon.

4. The microcapsule according to any one of claims 1 to 3, wherein the capsule core comprises up to 60 wt% of the water-immiscible organic solvent.

5. The microcapsule according to any one of claims 1 to 4, wherein the attractant is ethyl 3-methylbutanoate, methyl salicylate, amyl acetate, limonene or fruit extracts, or mixtures thereof.

6. The microcapsule according to any one of claims 1 to 5, wherein the attractant is ethyl 3-methylbutanoate.

7. The microcapsule according to any one of claims 1 to 6, wherein the weight ratio of pheromone to attractant is in the range from 1 / 99 to 40 / 60.

8. The microcapsule according to any one of claims 1 to 7, wherein the microcapsule comprises from 3 to 50 wt% capsule shell, based on the total weight of the microcapsule.

9. The microcapsule according to any one of claims 1 to 8, wherein mnnomer II comprises one or more difunctional and polyfunctional monomers.

10. The microcapsule according to any one of claims 1 to 9, wherein the flavor is selected from meat flavor, yeast flavor, seafood flavor, milk flavor, butter flavor, cheese flavor, on-ion flavor, and fruit flavors such as flavors of apple, apricot, banana, blackberry, cherry, currant, gooseberry, grape, grapefruit, raspberry and strawberry.

11. The microcapsule according to any one of claims 1 to 10, wherein the food attractant is selected from proteins, carbohydrates and hydrogenated carbohydrates.

12. The microcapsule according to claim 11, wherein the proteins are meat meal, fish meal, fish extracts, seafood, seafood extracts, or blood meal, insect parts, crickets powder, yeast extracts, egg yolk, protein hydrolysates, yeast autolysates, gluten hydrolysate.

13. The microcapsule according to claim 11, wherein the carbohydrates and hydrogenated carbohydrates are mono- and disaccharides or mixtures thereof, polysaccharides, pectines, glycerol, hydrogenated mono- and oligosaccharides.

14. The microcapsule according to any one of claim 1 to 9, wherein the attractant contains ethyl 3-methylbutanoate, methyl salicylate, amyl acetate, limonene, fruit extracts, or mixtures thereof.

15. The microcapsule according to any one of claims 1 to 14, wherein the pheromone comprises (E,E)-8,10-dodecadien-1-ol.

16. A process for the preparation of microcapsules according to any one of claims 1 to 15, which comprises preparing an oil-in-water emulsion from monomers, free-radical initiator, protective colloid and the pheromone to be encapsulated, and triggering the polymerization of the monomers by heating.

17. A method for controlling undesired insect infestation wherein the microcapsules as defined in any one of claims 1 to 15 are allowed to act on the habitat of the insects in question, or the plants to be protected from the insects in question.

## Patentansprüche

1. Mikrokapsel, umfassend einen Kapselkern, der ein Pheromon, ein mit Wasser nicht mischbares organisches Lösungsmittel und eine Kapselwand, die in polymerisierter Form
30 bis 90 Gew.-% an einem oder mehreren C₁-C₂₄-Alkylestern der Acrylsäure und/oder Methacrylsäure, Acrylsäure, Methacrylsäure und/oder Maleinsäure (Monomere I) ;
10 bis 70 Gew.-% an einem oder mehreren difunktionellen und/oder polyfunktionellen Monomeren (Monomere II) und
0 bis 40 Gew.-% an einem oder mehreren anderen Monomeren (Monomer III),
jeweils in Bezug auf das Gesamtgewicht der Monomere enthält,
wobei das Pheromon im Kapselkern in gelöster Form vorliegt,
wobei der Kapselkern ein Attractant, ausgewählt aus Nichtnahrungsmittel-Attractants und Nahrungsmittel-Attractants, enthält und wobei die Nichtnahrungsmittel-Attractants Aromen natürlichen oder synthetischen Ursprungs sind, oder Mischungen davon,
wobei das mit Wasser nicht mischbare organische Lösungsmittel eine Wasserlöslichkeit von bis zu 10 g/l bei 20°C aufweist,
wobei die Kapselwand in copolymerisierter Form 25 Gew.-% bis 75 Gew.-% Maleinsäure, Methacrylsäure und/oder Acrylsäure in Bezug auf das Gesamtgewicht der Monomere I umfasst,
wobei die difunktionellen Monomere Divinylmonomere, ausgewählt aus Diestern von Diolen mit Acrylsäure oder Methacrylsäure, und Diallyl- und Divinylethern von Diolen, sind und
wobei die polyfunktionellen Monomere Polyvinylmonomere, ausgewählt aus Polyestern von Polyolen mit Acrylsäure und/oder Methacrylsäure, Polyallyl- und Polyvinylethern von Polyolen, Trivinylbenzol und Trivinylcyclohexan, sind.

2. Mikrokapsel nach Anspruch 1, wobei das Pheromon eine Wasserlöslichkeit von bis zu 1000 mg/l bei 20°C aufweist.

3. Mikrokapsel nach den Ansprüchen 1 oder 2, wobei das organische Lösungsmittel ein Fettsäuretriglycerid oder ein Kohlenwasserstoff ist.

4. Mikrokapsel nach einem der Ansprüche 1 bis 3, wobei der Kapselkern bis zu 60 Gew.-% des mit Wasser nicht mischbaren organischen Lösungsmittels umfasst.

5. Mikrokapsel nach einem der Ansprüche 1 bis 4, wobei es sich bei dem Attractant um Ethyl-3-methylbutanoat, Methylsalicylat, Amylacetat, Limonen oder Fruchtextrakte oder Mischungen davon handelt.

6. Mikrokapsel nach einem der Ansprüche 1 bis 5, wobei es sich bei dem Attractant um Ethyl-3-methylbutanoat handelt.

7. Mikrokapsel nach einem der Ansprüche 1 bis 6, wobei das Gewichtsverhältnis von Pheromon zu Attractant im Bereich von 1/99 bis 40/60 liegt.

8. Mikrokapsel nach einem der Ansprüche 1 bis 7, wobei die Mikrokapsel 3 bis 50 Gew.-% Kapselhülle in Bezug auf das Gesamtgewicht der Mikrokapsel umfasst.

9. Mikrokapsel nach einem der Ansprüche 1 bis 8, wobei Monomer II ein oder mehrere difunktionelle und polyfunktionelle Monomere umfasst.

10. Mikrokapsel nach einem der Ansprüche 1 bis 9, wobei das Aroma aus Fleischaroma, Hefearoma, Meeresfruchtaroma, Milcharoma, Butteraroma, Käsearoma, Zwiebelaroma und Fruchtaromen wie Aromen von Apfel, Aprikose, Banane, Brombeere, Kirsche, Johannisbeere, Stachelbeere, Weintraube, Grapefruit, Himbeere und Erdbeere ausgewählt ist.

11. Mikrokapsel nach einem der Ansprüche 1 bis 10, wobei das Nahrungsmittel-Attractant aus Proteinen, Kohlenhydraten und hydrierten Kohlenhydraten ausgewählt ist.

12. Mikrokapsel nach Anspruch 11, wobei es sich bei den Proteinen um Fleischmehl, Fischmehl, Fischextrakte, Meeresfrüchte, Meeresfruchtextrakte oder Blutmehl, Insektenteile, Grillenpulver, Hefeextrakte, Eidotter, Proteinhydrolysate, Hefeautolysate, Glutenhydrolysat handelt.

13. Mikrokapsel nach Anspruch 11, wobei es sich bei den Kohlenhydraten und hydrierten Kohlenhydraten um Mono- und Disaccharide oder Mischungen davon, Polysaccharide, Pektine, Glycerin, hydrierte Mono- und Oligosaccharide handelt.

14. Mikrokapsel nach einem der Ansprüche 1 bis 9, wobei das Attractant Ethyl-3-methylbutanoat, Methylsalicylat, Amylacetat, Limonen, Fruchtextrakte oder Mischungen davon enthält.

15. Mikrokapsel nach einem der Ansprüche 1 bis 14, wobei das Pheromon (E,E)-8,10-Dodecadien-1-ol umfasst.

16. Verfahren zur Herstellung von Mikrokapseln nach einem der Ansprüche 1 bis 15, bei dem man aus Monomeren, Radikalinitiator, Schutzkolloid und dem zu verkapselnden Pheromon eine Öl-in-Wasser-Emulsion bildet und die Polymerisation der Monomere durch Erhitzen initiiert.

17. Verfahren zum Bekämpfen von unerwünschter Verseuchung mit Insekten, wobei die Mikrokapseln wie in einem der Ansprüche 1 bis 15 definiert auf den Lebensraum der jeweiligen Insekten oder auf die Pflanzen, die gegen die jeweiligen Insekten zu schützen sind, wirken gelassen werden.

## Revendications

1. Microcapsule comprenant un noyau de capsule, qui contient une phéromone, un solvant organique non miscible avec l'eau, et une paroi de capsule, qui contient, sous forme polymérisée
30 à 90 % en poids d'un ou plusieurs esters d'alkyle en C₁-C₂₄ diacide acrylique et/ou diacide méthacrylique, d'acide acrylique, d'acide méthacrylique et/ou d'acide maléique (monomères I),
10 à 70 % en poids d'un ou plusieurs monomères difonctionnels et/ou polyfonctionnels (monomères II), et
0 à 40 % en poids d'un ou plusieurs autres monomères (monomère III), dans chaque cas sur la base du poids total des monomères,
dans laquelle la phéromone est présente sous forme dissoute dans le noyau de capsule,
dans laquelle le noyau de capsule contient un attracteur choisi parmi des attracteurs non alimentaires et des attracteurs alimentaires, et dans laquelle les attracteurs non alimentaires sont des arômes d'origine naturelle ou synthétique, ou des mélanges de ceux-ci,
dans laquelle le solvant organique non miscible avec l'eau a une solubilité dans l'eau de jusqu'à 10 g/l à 20 °C,
dans laquelle la paroi de capsule comprend, sous forme copolymérisée, 25 % à 75 % en poids d'acide maléique, d'acide méthacrylique et/ou d'acide acrylique sur la base de la quantité totale des monomères I,
dans laquelle les monomères difonctionnels sont des monomères divinyliques choisis parmi des diesters de diols avec l'acide acrylique ou l'acide méthacrylique, et des éthers diallyliques et divinyliques de diols, et dans laquelle les monomères polyfonctionnels sont des monomères de polyvynyle choisis parmi des polyesters de polyols avec l'acide acrylique et/ou l'acide méthacrylique, des éthers polyallyliques et polyvinyliques de polyols, le trivinylbenzène et le trivinylcyclohexane.

2. Microcapsule selon la revendication 1, dans laquelle la phéromone a une solubilité dans l'eau allant jusqu'à 1000 mg/l à 20 °C.

3. Microcapsule selon les revendications 1 ou 2, dans laquelle le solvant organique est un triglycéride d'acide gras ou un hydrocarbure.

4. Microcapsule selon l'une quelconque des revendications 1 à 3, dans laquelle le noyau de capsule comprend jusqu'à 60 % en poids du solvant organique non miscible dans l'eau.

5. Microcapsule selon l'une quelconque des revendications 1 à 4, dans laquelle la substance attractive est le 3-méthylbutanoate d'éthyle, le salicylate de méthyle, l'acétate d'amyle, le limonène ou des extraits de fruit, ou des mélanges de ceux-ci.

6. Microcapsule selon l'une quelconque des revendications 1 à 5, dans laquelle la substance attractive est le 3-méthylbutanoate d'éthyle.

7. Microcapsule selon l'une quelconque des revendications 1 à 6, dans laquelle le rapport en poids de la phéromone à la substance attractive est dans la plage de 1/99 à 40/60.

8. Microcapsule selon l'une quelconque des revendications 1 à 7, la microcapsule comprenant de 3 à 50 % en poids de coque de capsule, sur la base du poids total de la microcapsule.

9. Microcapsule selon l'une quelconque des revendications 1 à 8, dans laquelle le monomère II comprend un ou plusieurs monomères difonctionnels et polyfonctionnels.

10. Microcapsule selon l'une quelconque des revendications 1 à 9, dans laquelle l'arôme est choisi parmi un arôme de viande, un arôme de levure, un arôme de fruits de mer, un arôme de lait, un arôme de beurre, un arôme de fromage, un arôme d'oignon et des arômes de fruits tels que des arômes de pomme, d'abricot, de banane, de mûre, de cerise, de groseille, de groseille à maquereau, de raisin, de pamplemousse, de framboise et de fraise.

11. Microcapsule selon l'une quelconque des revendications 1 à 10, dans laquelle l'attracteur alimentaire est choisi parmi des protéines, des glucides et des glucides hydrogénés.

12. Microcapsule selon la revendication 11, dans laquelle les protéines sont de la farine de viande, de la farine de poisson, des extraits de poisson, des fruits de mer, des extraits de fruits de mer, ou de la farine de sang, des parties d'insectes, de la poudre de criquet, des extraits de levure, du jaune d'oeuf, des hydrolysats de protéine, des autolysats de levure, un hydrolysat de gluten.

13. Microcapsule selon la revendication 11, dans laquelle les glucides et les glucides hydrogénés sont des mono- et disaccharides ou des mélanges de ceux-ci, des polysaccharides, des pectines, le glycérol, des mono- et oligosaccharides hydrogénés.

14. Microcapsule selon l'une quelconque des revendications 1 à 9, dans laquelle l'attracteur contient le 3-méthylbutanoate d'éthyle, le salicylate de méthyle, l'acétate d'amyle, le limonène, des extraits de fruits, ou des mélanges de ceux-ci.

15. Microcapsule selon l'une quelconque des revendications 1 à 14, dans laquelle la phéromone comprend le (E,E)-8,10-dodécadién-1-ol.

16. Procédé de préparation de microcapsules selon l'une quelconque des revendications 1 à 15, qui comprend la préparation d'une émulsion d'huile dans l'eau à partir de monomères, d'un initiateur de radical libre, d'un colloïde protecteur et de la phéromone devant être encapsulée, et le déclenchement de la polymérisation des monomères par chauffage.

17. Procédé de lutte contre l'infestation par des insectes indésirables dans lequel on laisse agir les microcapsules telles que définies dans l'une quelconque des revendications 1 à 15 sur l'habitat des insectes en question, ou les plantes devant être protégées contre les insectes en question.
